# EUROPEAN PATENT SPECIFICATION

(11) **EP 2 487 082 B1**
(45) Date of publication and mention of the grant of the patent: **26.06.2013**
(21) Application number: 12154855.6
(22) Date of filing: 10.02.2012
(51) Int. Cl.: B60T 11/16

(54) **Vehicle hydraulic master cylinder and method of forming a seal groove therein**
Hydraulischer Fahrzeug-Hauptbremszylinder und Verfahren zur Herstellung einer Nut in dem Hauptbremszylinder
Maître-cylindre hydraulique de véhicule et procédé pour y former une rainure

(30) Priority: 10.02.2011 JP 2011026759; 10.02.2011 JP 2011026760; 10.02.2011 JP 2011026761
(43) Date of publication of application: 15.08.2012
(73) Proprietor: Nissin Kogyo Co., Ltd., Ueda-city, Nagano (JP)
(72) Inventor: Hatakoshi, Genichi, Nagano (JP); Sakai, Go, Nagano (JP); Ishiguro, Junpei, Nagano (JP); Hanaoka, Mitsuhiro, Nagano (JP); Kobayashi, Norihiro, Nagano (JP)
(74) Representative: HOFFMANN EITLE

(56) References cited:
- EP-A1- 2 165 898
- JP-A- 2005 313 669

## Description

### FIELD

The present invention relates to vehicle hydraulic master cylinders for hydraulically operating brakes of vehicles such as automobiles, motorcycles and motor tricycles. More specifically, the present invention relates to a plunger type vehicle hydraulic master cylinder in which a concave-shaped plunger is slidably inserted in a cylinder hole via a cup seal.

The present invention also relates to a seal groove to which the cup seal is fitted and a method for forming the seal groove.

### BACKGROUND

As a vehicle hydraulic master cylinder, for example, an annular seal groove is formed at an inner peripheral surface of a cylinder hole, a cup seal is fitted into the seal groove, and a plunger is slidably inserted into the cylinder hole in a sealed state. For example, in JP-2010-071406-A, the seal groove has: a circumferential seal groove bottom surface; a cylinder hole bottom-side surface; a cylinder hole opening-side surface; and a seal groove opening opened toward the plunger. Also, the cup seal includes: a base portion located at a cylinder hole opening-side region of the seal groove; an inner peripheral lip portion that extends toward a cylinder hole bottom from the base portion so that an inner peripheral surface thereof slides along an outer peripheral surface of the plunger; and an outer peripheral lip portion that likewise extends toward the cylinder hole bottom from the base portion so that an outer peripheral surface thereof abuts against the seal groove bottom surface. And, about radial outer 1/2 of the base portion of the cup seal abuts against the cylinder hole Opening-side surface of the seal groove. Along about radial inner 1/2 of the base portion of the cup seal, there is formed a contact pressure adjustment surface consisting of a conical surface intersecting a radial plane of the cylinder hole at an acute angle in a direction in which the conical surface gradually goes away from the cylinder hole opening-side surface as the conical surface extends radial inward. The contact pressure adjustment surface is formed so that the contact pressure adjustment surface and the cylinder hole opening-side surface do not abut against each other in a non-operating state. In addition, a radial inner region of the cylinder hole opening-side surface of the seal groove is chamfered into a rounded shape so as to be continuous with the inner peripheral surface of the cylinder hole, thus preventing the base portion of the cup seal from being caught and jammed between the cylinder hole inner peripheral surface and the plunger at the time of operation.

The technique of JP-2010-071406-A can basically suppress jamming of the cup seal to some extent by the contact pressure adjustment surface. However, for example, when the technique is used in a brake system including a brake control mechanism, the cup seal might be caught and jammed between the cylinder hole Opening-Side surface of the seal groove and the plunger upon change in hydraulic pressure or plunger return force due to the operation of the brake control mechanism.

Furthermore, the radial inner region of the cylinder hole opening-side surface of the seal groove is chamfered into a rounded shape so as to be continuous with the inner peripheral surface of the cylinder hole, but a process for chamfering the radial inner region into a rounded shape has to be performed so that a feed rate of a cutter in a cylinder radial direction is precisely controlled, thus requiring time and effort to perform the process. Moreover, when a corner is formed at a region where the rounded region and the cylinder hole inner peripheral surface are continuous with each other, the cup seal might be damaged by this corner.

As the same kind of the technique, for example in JP-2005-313669-A, one end of a return spring is contained in a concave portion of the plunger and in this state, the one end of the return spring is seated on a bottom of the concave portion while the other end of the return spring is seated on the bottom of the cylinder hole, thus allowing the plunger to return to an initial state position, i.e., a non-operating state position, by the return spring. A pressurized hydraulic fluid in the hydraulic pressure chamber is supplied to a brake apparatus through a union hole opened at a peripheral wall of the cylinder hole.

However, in the technique of JP-2005-313669-A, an expansion groove extending from a tip position of the plunger in the initial state to the cylinder hole bottom is provided at an inner peripheral wall of the cylinder hole so that the union hole opened at the peripheral wall of the cylinder hole will not be closed when the plunger is moved (forward) toward the cylinder hole bottom. Hence, the hydraulic pressure chamber is increased in volume, and a stroke amount of the plunger has to be increased in order to send the pressurized hydraulic fluid to the union hole via the expansion groove, resulting in an increase in axial length of the master cylinder. Furthermore, since a process for forming the expansion groove has to be performed, the number of process steps is increased, thus causing an increase in cost.

### SUMMARY

One object of the present invention is to provide a vehicle hydraulic master cylinder capable of preventing jamming of a cup seal and improving durability of the cup seal.

According to an aspect of the present invention, there is provided a vehicle hydraulic master cylinder comprising: a bottomed cylinder hole formed in a cylinder main body; an annular seal groove provided at the cylinder hole; a cup seal fitted into the seal groove; and a plunger that has a concave portion opened at its tip and is slidably inserted into the cylinder hole via the cup seal, the seal groove comprising: a seal groove bottom surface extended along a circumferential direction of the cylinder hole; a cylinder hole bottom-side surface; a cylinder hole opening-side surface; and a seal groove opening opened toward the plunger, the cup seal comprising: a base portion located closer to the cylinder hole opening within the seal groove; an inner peripheral lip portion that extends toward the cylinder hole bottom from the base portion so that an inner peripheral surface thereof slides along an outer peripheral surface of the plunger; and an outer peripheral lip portion that extends toward the cylinder hole bottom from the base portion so that an outer peripheral surface thereof abuts against the seal groove bottom surface, wherein the seal groove further comprises a chamfered region formed by chamfering a radial inner region of the cylinder hole opening-side surface into a rounded shape continuous with an inner peripheral surface of the cylinder hole, wherein the cup seal further comprises an elastic protrusive piece protruded from the inner peripheral lip portion to abut against the cylinder hole bottom-side surface, and a contact pressure adjustment surface formed at a radial inner region of the base portion, the contact pressure adjustment surface consisting of a conical surface intersecting a radial plane of the cylinder hole at an acute angle in a direction in which the conical surface gradually goes away from the cylinder hole opening-side surface as the conical surface extends radial inward, and wherein, at the time of non-operation, a starting point of the contact pressure adjustment surface and a starting point of the chamfered region are located outwardly of a tip abutment point of the elastic protrusive piece against the cylinder hole bottom-side surface.

At the time of non-operation, the starting point of the contact pressure adjustment surface and the starting point of the chamfered region may be located between: a cylinder radial position of an outermost abutment point of an abutment surface of the base portion against the cylinder hole opening-side surface; and a cylinder radial position of the tip abutment point of the elastic protrusive piece against the cylinder hole bottom-side surface.

The starting point of the contact pressure adjustment surface and the starting point of the chamfered region may be located at the same position.

The chamfered region may comprise: a rounded region formed so as to be continuous with the cylinder hole opening-side surface; and a tapered region chamfered into a tapered shape so that a cylinder hole opening-side region of the tapered shape is gradually reduced in diameter from a cylinder hole opening-side end of the rounded region toward the inner peripheral surface of the cylinder hole.

Since the starting point of the contact pressure adjustment surface and the starting point of the chamfered region are located outwardly of the elastic protrusive piece abutment point at the time of non-operation, the length from the starting point of the contact pressure adjustment surface of the cup seal to the outer peripheral surface of the plunger can be increased, and a gap provided between the chamfered region of the seal groove and the contact pressure adjustment surface of the cup seal at the time of non-operation can be formed to have a large size, so that, when hydraulic pressure is applied, the cup seal suitably deforms into the gap to thereby disperse stress. As a result, the cup seal is prevented from being caught and jammed between the cylinder hole opening-side surface of the seal groove and the plunger, thereby improving durability of the cup seal.

At the time of non-operation, the starting point of the contact pressure adjustment surface and the starting point of the chamfered region are located between: the cylinder radial position of the outermost abutment point of the abutment surface against the cylinder hole opening-side surface; and the cylinder radial position of the tip abutment point of the elastic protrusive piece against the cylinder hole bottom-side surface, thereby preventing falling of the cup seal even when hydraulic pressure is applied at the time of operation.

The starting point of the contact pressure adjustment surface of the cup seal and the starting point of the chamfered region of the seal groove are located at the same position. Thus, when hydraulic pressure is applied to the cup seal at the time of operation, the contact pressure adjustment surface of the cup seal is gradually deformed along the shape of the chamfered region of the seal groove, thereby allowing the cup seal to suitably deform into the gap.

The chamfered region is provided with: the rounded region formed so as to be continuous with the radial inner region of the cylinder hole opening-side surface; and the tapered region chamfered into a tapered shape from the rounded region toward the inner peripheral surface of the cylinder hole, Thus, at the time of braking and at the time of braking release, the contact pressure adjustment surface is gradually deformed along the shape of the chamfered region to allow the deformation through the gap between the contact pressure adjustment surface and the chamfered region, thereby preventing the cup seal from being damaged when the contact pressure adjustment surface is deformed.

Since the chamfered region of the seal groove is formed by: the rounded region; and the tapered region chamfered into a tapered shape from an end point of the rounded region toward the inner peripheral surface of the cylinder hole, a process for forming the chamfered region is facilitated. In particular, a tool for forming the seal groove is provided with a tapered cutter for forming the tapered region, thereby facilitating, control of feed rate of the cutter in the cylinder radial direction and improving machinability. In addition, the rounded region is continuous with the tapered region and the cylinder hole inner peripheral surface in a smooth manner to the extent possible, thereby suppressing jamming of the cup seal.

Anther object of the present invention is to provide: a seal groove of a vehicle hydraulic master cylinder in which a radial inner region of a cylinder hole opening-side surface of the seal groove is favorably chamfered to suppress jamming of a cup seal, and a process for forming a chamfered region is facilitated to enable an improvement in workability; and a method for forming the seal groove.

According to another aspect of the present invention, there is provided a vehicle hydraulic master cylinder in which a seal groove is formed at an inner peripheral surface of a cylinder hole in a cylinder main body and a plunger is slidably inserted into the cylinder hole via a cup seal fitted to the seal groove, wherein the seal groove comprises: a seal groove bottom surface extended along a circumferential direction of the cylinder hole; a cylinder hole bottom-side surface; a cylinder hole opening-side surface; a seal groove opening opened toward the plunger; and a chamfered region having: a rounded region formed by chamfering a radial inner region of the cylinder hole opening-side surface into a rounded shape; and a radial inner tapered region chamfered into a tapered shape so that a cylinder hole opening-side region of the tapered shape is gradually reduced in diameter from a cylinder hole opening-side end of the rounded region toward the inner peripheral surface of the cylinder hole.

The cylinder hole opening-side surface of the seal groove may be provided with a radial outer tapered region continuous with the cylinder hole opening-side surface and gradually inclined toward a cylinder hole opening to extend toward the seal groove opening and reach the rounded region.

There is also provided a method for forming a seal groove in the vehicle hydraulic master cylinder, wherein the method uses a cutting tool in which a seal groove forming cutter and a chamfered region cutter are integrally provided at a tip of a rotation shaft, the seal groove forming cutter for performing cutting for the seal groove bottom surface, the cylinder hole bottom-side surface and the cylinder hole opening-side surface, the chamfered region cutter for performing cutting for the rounded region and the tapered region, and wherein, in a state in which the rotation shaft is inserted into the cylinder hole so that the rotation shaft is parallel to an axis of the cylinder hole, while rotating the seal groove forming cutter and the chamfered region cutter, the rotation shaft is moved toward a cylinder hole peripheral wall and is moved along the inner peripheral surface of the cylinder hole in a circumferential direction, thereby simultaneously performing a cutting process for the seal groove and a cutting process for the chamfered region.

Since the radial inner region of the cylinder hole opening-side surface of the seal groove is continuous with the inner peripheral surface of the cylinder hole in a smooth manner to the extent possible through the rounded region and tapered region of the chamfered region, jamming of the cup seal can be suppressed. Further, since the radial inner tapered region is provided between the rounded region and the cylinder hole inner peripheral surface, the process for forming the chamfered region can be facilitated, thereby improving workability.

The cylinder hole opening-side surface of the seal groove is provided with the radial outer tapered region continuous with the cylinder hole opening-side surface and gradually inclined toward the cylinder hole opening to extend toward the seal groove opening and reach the rounded region. Thus, a gap provided between the chamfered region of the seal groove and the cup seal can be set to have a large size, so that, when hydraulic pressure is applied, the cup seal suitably deforms into the gap to thereby disperse stress,

In the method for forming a seal groove in the vehicle hydraulic master cylinder, the cutting processes are performed by using the cutting tool integrally provided with: the seal groove forming cutter for performing cutting for the seal groove bottom surface, the cylinder hole bottom-side surface and the cylinder hole opening-side surface; and the chamfered region cutter for performing cutting for the rounded region and the tapered region. Thus, the seal groove and the chamfered region can be favorably formed at the same time without strictly controlling a feed rate of the cutting tool in a cylinder radial direction, thereby improving machinability and workability.

Still another object of the present invention is to provide a vehicle hydraulic master cylinder in which a reduction in axial length of the master cylinder is enabled and a cost reduction can be achieved.

According to still another aspect of the present invention, there is provided a vehicle hydraulic master cylinder in which the vehicle hydraulic master cylinder comprises: a bottomed cylinder hole formed in a cylinder main body; and a bottomed cylindrical plunger having a concave portion opened toward a bottom of the cylinder hole, the plunger is slidably inserted into the cylinder hole via a cup seal provided at an inner periphery of the cylinder hole, a hydraulic pressure chamber is defined between the plunger and the cylinder hole bottom, the cylinder main body is provided with a union hole opened to the hydraulic pressure chamber, and a return spring for returning the plunger to a non-operating position is seated at its one end on a bottom of the concave portion of the plunger and seated at its other end on the bottom of the cylinder hole, wherein the union hole is opened at the bottom of the cylinder hole.

The union hole may be opened at a position located outwardly of the bottom 3a of the cylinder hole, on which the other end of the return spring is seated.

The union hole may be formed so that its axis is parallel to a center axis of the cylinder hole.

Since the union hole is opened at the bottom of the cylinder hole, the plunger will not close the union hole even when the plunger is moved toward the cylinder hole bottom, and it is not necessary to provide an expansion groove as compared with the conventional technique, thereby achieving not only reductions in size and weight of the master cylinder but also reduction in a cost.

Since the union hole is opened at a position located outwardly of the bottom of the cylinder hole, on which the other end of the return spring is seated, the return spring can be placed at a favorable position without closing the union hole.

The axis of the union hole is parallel to the center axis of the cylinder hole. Thus, the direction of a cutting process coincides with the direction of a cutting process for the cylinder hole, and the cutting process for the cylinder hole and the cutting process for the union hole can be carried out in a single step, thereby improving machinability of the master cylinder including the union hole,

### BRIEF DESCRIPTION OF DRAWINGS

FIG. 1 cross sectionally illustrates a vehicle hydraulic master cylinder according to a first embodiment.
FIG. 2 enlargedly illustrates the vehicle hydraulic master cylinder.
FIGS. 3A and 3B illustrate a cutting process for a seal groove performed in a method for manufacturing the vehicle hydraulic master cylinder.
FIG. 4 enlargedly illustrates a vehicle hydraulic master cylinder according to a second embodiment.
FIG. 5 enlargedly illustrates a seal groove according to a third embodiment.
FIG. 6 cross-sectionally illustrates a vehicle hydraulic master cylinder according to a fourth embodiment.

### DETAILED DESCRIPTION

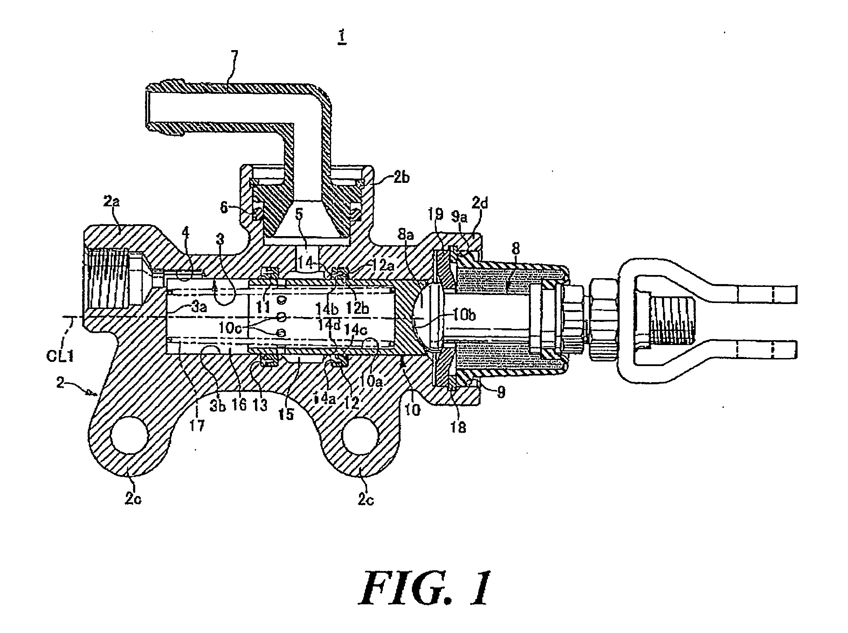

FIGS. 1 to 3B illustrate a first embodiment of a vehicle hydraulic master cylinder 1. The hydraulic master cylinder 1 has a cylinder main body 2 in which a bottomed cylinder hole 3 having a bottom (cylinder hole bottom) 3 a is formed. The cylinder may body includes a union boss portion 2a, a boss portion 2b, attachment brackets 2c, 2c and a large diameter cylindrical portion 2d. The union boss portion 2a having a union hole 4 protrudes outwardly of an upper part of the cylinder hole bottom 3a in parallel with a center axis CL1 of the cylinder hole 3. The boss portion 2b having a liquid passage hole 5 communicated with the cylinder hole 3 protrudes upwardly of the cylinder main body 2. A connector 7 for connection with a reservoir (not illustrated) is attached to the boss portion 2b via a seal member 6, The attachment brackets 2c, 2c for attachment to a vehicle are protruded at a lower part of the cylinder main body 2, The large diameter cylindrical portion 2d having a large diameter hole 9 is provided continuously with an opening (cylinder hole opening) of the cylinder hole 3. A tip portion of a push rod 8 is inserted into the large diameter hole 9.

A plunger 10 is slidably inserted into the cylinder hole 3 via a first cup seal 11 and a second cup seal 12. The first cup seal 11 and the second cup seal 12 are respectively fitted into a first seal groove 13 and a second seal groove 14 formed at an inner peripheral surface 3b of the cylinder hole 3. The first seal groove 13 is located closer to the cylinder hole bottom relative to the liquid passage hole 5, and the second seal groove 14 is located closer to the cylinder hole opening relative to the liquid passage hole 5. And, a supply oil chamber 15 is formed at a region of the inner peripheral surface 3b of the cylinder hole 3 between the first and second seal grooves 13 and 14, The supply oil chamber 15 is continuous with the liquid passage hole 5.

The plunger 10 is formed into a bottomed cylindrical shape having a concave portion 10a opened toward the cylinder hole bottom. A hydraulic pressure chamber 16 is defined between a bottom of the concave portion 10a and the bottom 3a of the cylinder hole 3. A return spring 17 for returning the plunger 10 to a given initial position in a non-operating state is located within the hydraulic pressure chamber 16 such that one end of the return spring 17 is seated on the bottom of the concave portion 10a and that the other end of the return spring 17 is seated on the bottom 3a of the cylinder hole 3. The plunger 10 also has a spherical concave portion 10b at an outer surface thereof located adjacent to the cylinder hole opening. The spherical concave portion 10b receives a pushing force from a semispherical head portion 8a of the push rod 8. Plural circumferential small diameter communication ports 10c are formed in a peripheral wall of the concave portion 10a to communicate the hydraulic pressure chamber 15 with the supply oil chamber 15 when the plunger 10 is located at the initial position in a non-operating state. The semispherical head portion 8a of the push rod 8 is inserted into the cylinder hole 3 through the large diameter hole 9, and a snap ring 18 and a retainer 19 are engaged with an engagement groove 9a formed at an inner periphery of the large diameter hole 9, thereby preventing disconnection of the push rod 8.

In this embodiment, an axis of the union hole 4 is parallel to the center axis CL1 of the cylinder hole 3, and the union hole 4 is opened at a position located above and outwardly of the bottom 3a of the cylinder hole 3, on which the other end of the return spring 17 is seated. On the other hand, the liquid passage hole 5 is formed along a direction orthogonal to the center axis CL1 of the cylinder hole 3.

The first seal groove 13 has; a seal groove bottom surface 13a extended along a circumferential direction of the cylinder hole 3; a cylinder hole bottom-side surface 13b; a cylinder hole opening-side surface 13c; and a seal groove opening 13d opened toward the plunger 10. A radial inner region of the cylinder hole opening-side surface 13c is formed into a chamfered region 13g having: a rounded region 13e chamfered into a round shape (curved shape) so as to be continuous with the cylinder hole opening-side surface 13c; and a tapered region 13f chamfered into a tapered shape so that a cylinder hole opening-side region of the tapered shape is gradually reduced in diameter from a cylinder hole opening-side end of the rounded region 13e toward the inner peripheral surface 3b of the cylinder hole 3.

The first cup seal 11, fitted into the first seal groove 13, includes: a base portion 11a located closer to the cylinder hole opening within the first seal groove 13; an inner peripheral lip portion 11b that extends along the seal groove opening 13d toward the cylinder hole bottom from a radial outer region of the base portion 11a so that an inner peripheral surface of the inner peripheral lip portion 11b slides along an outer peripheral surface of the plunger 10; an outer peripheral lip portion 11c that likewise extends toward the cylinder hole bottom from a radial outer region of the base portion 11a so that an outer peripheral surface of a tip of the outer peripheral lip portion 11c abuts against a center of the seal groove bottom surface 13a; and plural elastic protrusive pieces 11d provided equidistantly at given intervals in a circumferential direction. The elastic protrusive pieces 11d protrude toward the cylinder hole bottom from of the inner peripheral lip portion 11b so that tips thereof abut against a radial inner region of the cylinder hole bottom-side surface 13b.

A base end surface 11e of the base portion 11a faces the cylinder hole opening-side surface 13c of the first seal groove 13. About radial outer 1/2 of the base end surface 11e projects toward the cylinder hole opening, When the first cup seal 11 is fitted into the first seal groove 13, the radial outer region of the base end surface 11e serves as an abutment surface 11f that comes into plane-to-plane contact with a radial outer region of the cylinder hole opening-side surface 13c. On the other hand, about radial inner 1/2 of the base end surface 11e serves as a contact pressure adjustment surface 11g. The contact pressure adjustment surface 11g consists of a conical surface intersecting a radial plane of the cylinder hole 3 at an acute angle in a direction in which the conical surface gradually goes away from the cylinder hole opening-side surface 13c as the conical surface extends radial inward from the abutment surface 11f. In a nan-aperating state of the hydraulic master cylinder 1, the contact pressure adjustment surface 11g does not come into contact with the chamfered region 13g formed along about radial inner 1/2 of the cylinder hole apening-sidc surface 13c, thereby forming a gap E1. In an operating state of the hydraulic master cylinder 1, the base portion 11a is deformed with an increase in hydraulic pressure of the hydraulic pressure chamber 16; thus, the chamfered region 13g formed along about radial inner 1/2 of the cylinder hole opening-side surface 13c and the contact pressure adjustment surface 11g formed along about radial inner 1/2 of the base end surface 11e are pressed against each other.

A length from the abutment surface 11f to the tip of each elastic protrusive piece 11d is larger than an axial length of the first seal groove 13. Thus, when the first cup seal 11 is fitted into the first seal groove 13, the tip of each elastic protrusive piece 11d abuts against the cylinder hole bottom-side surface 13b while being distorted inwardly toward the plunger 10. On the other hand, a length from the abutment surface 11f to a tip surface of the outer peripheral lip portion 11c is smaller than the axial length of the first seal groove 13. Thus, when the first cup seal 11 is fitted into the first seal groove 13, the tip of the outer peripheral lip portion 11c is kept in a free state so as to be easily distorted toward the inner peripheral lip portion 11b and so as not to prevent the flow of a hydraulic fluid at the time of braking release,

At the time of non-operation, a starting point P1 of the contact pressure adjustment surface 11g and a starting point P2 of the chamfered region 13g are located between: a cylinder radial position L1 of an uppermost abutment point P3 of the abutment surface 11f against the cylinder hole opening-side surface 13c; and a cylinder radial position L2 of a tip abutment point P4 of the elastic protrusive piece 11d against the cylinder hole bottom-side surface 13b, Besides, the starting points P1 and P2 are provided so that a cylinder radial position of the starting point P2 of the chamfered region 13g is located outwardly of a cylinder radial position of the starting point P1 of the contact pressure adjustment surface 11g in the cylinder radial direction.

The second seal groove 14 has: a seal groove bottom surface 14a extended along the circumferential direction of the cylinder hole 3; a cylinder hole bottom-side surface 14b; a cylinder hole opening-side surface 14c; and a seal groove opening 14d opened toward the plunger 10.

The second cup seal 12, fitted into the second seal groove 14, includes: a base portion 12a located closer to the cylinder hole opening within the second seal groove 14; an inner peripheral lip portion 12b that extends toward the cylinder hole bottom from a radial inner region of the base portion 12a so that an inner peripheral surface of the inner peripheral lip portion 12b slides along the outer peripheral surface of the plunger 10; and an outer peripheral lip portion 12c that likewise extends toward the cylinder hole bottom from a radial outer region of the base portion 12a so that an outer peripheral surface of the outer peripheral lip portion 12c abuts against the seal groove bottom surface 14a. Thicknesses of the inner peripheral lip portion 12b and the outer peripheral lip portion 12c in the radial direction are substantially equal to each other, A length from the base portion 12a to a tip of the outer peripheral lip portion 12c is equal to or slightly larger than an axial length of the second seal groove 14, and a length from the base portion 12a to a tip of the inner peripheral lip portion 12b is smaller than the axial length of the second seal groove 14.

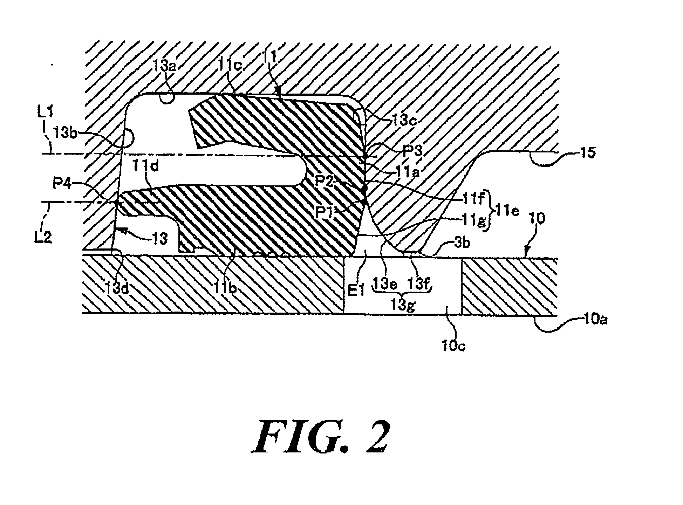

As illustrated in FIGS. 1 and 2, at the time of non-operation, in the hydraulic master cylinder 1, a spring force of the return spring 17 keeps the communication ports 10c of the plunger 10 at initial positions located closer to the cylinder hole opening relative to the first cup seal 11, and the hydraulic pressure chamber 16 and the supply oil chamber 15 are communicated with each other via the communication ports 10c, thus allowing a hydraulic fluid to circulate between the reservoir and the hydraulic pressure chamber 16 via the liquid passage hole 5, the supply oil chamber 15 and plural the communication ports 10c. The base portion 11a, the inner peripheral lip portion 11b and the outer peripheral lip portion 11c of the first cup seal 11 abut against the cylinder hole opening-side surface 13c of the first seal groove 13, the outer peripheral surface of the plunger 10, and the seal groove bottom surface 13a, respectively, so that the gap E1 is provided between the chamfered region 13g of the first seal groove 13 and the contact pressure adjustment surface 11g of the first cup seal 11. The base portion 12a, the inner peripheral lip portion 12b and the outer peripheral lip portion 12c of the second cup seal 12 are brought into intimate contact with the cylinder hole opening-side surface 14c of the second seal groove 14, the outer peripheral surface of the plunger 10, and the seal groove bottom surface 14a, respectively. Thus, intrusion of outside air into the cylinder hole 3 and leakage of the hydraulic fluid to outside are prevented.

At the time of braking, when the plunger 10 is pushed by the push rod 8, the plunger 10 advances within the cylinder hole 3 toward the cylinder hole bottom while compressing the return spring 17. When the communication ports 10c pass through the first cup seal 11, hydraulic pressurization starts in the hydraulic pressure chamber 16 upon interruption of communication between the hydraulic pressure chamber 16 and the supply oil chamber 15, and the pressurized hydraulic fluid is supplied to a brake system through the union hole 4. In this time, since the union hole 4 is opened at the bottom 3a of the cylinder hole 3, the plunger 10 will not close the union hole 4 at the time of operation; thus, unlike a conventional technique, it is not necessary to provide an expansion groove at an inner peripheral wall of the cylinder hole 3. As a result, provided that the plunger 10 has the same diameter, a stroke amount of the plunger 10 can be reduced, and the axial length of the hydraulic master cylinder 1 can be shortened.

At the time of braking, the first cup seal 11 receives the hydraulic pressure from the hydraulic pressure chamber 16, thereby deforming the base portion 11 a toward cylinder hole opening. Here, the first seal groove 13 has the chamfered region 13g smoothly connecting the cylinder hole opening-side surface 13c and the inner peripheral surface 3b of the cylinder hole 3. And, at the time of non-operation, the starting point P1, of the contact pressure adjustment surface 11g and the starting point P2 of the chamfered region 13g are located between: the cylinder radial position L1 of the uppermost abutment point P3 of the abutment surface 11f; and the cylinder radial position L2 of the tip abutment point P4 of the elastic protrusive piece 11d. Thus, the length from the starting point P1 of the contact pressure adjustment surface 11g to the outer peripheral surface of the plunger 10 can be increased, and the gap E1 provided between the chamfered region 13g and the contact pressure adjustment surface 11g at the time of non-operation can be formed to have a large size. As a result, when hydraulic pressure is applied, the first cup seal 11 suitably deforms into the gap E1 to thereby disperse stress, and the radial inner region of the base portion 11a of the first cup seal 11 can be prevented from being caught and jammed between the inner peripheral surface 3b of the cylinder hole 3 and the outer peripheral surface of the plunger 10 at the time of braking and at the time of braking release, so that the movement of the plunger 10 can be facilitated and the durability of the first cup seal 11 can be improved. Moreover, the starting point P1 of the contact pressure adjustment surface 11g and the starting point P2 of the chamfered region 13g are located between: the cylinder radial position L1 of the outermost abutment point P3 of the abutment surface 11f; and the cylinder radial position L2 of the tip abutment point P4 of the elastic protrusive piece 11d, thereby preventing falling of the first cup seal 11 even when the hydraulic pressure is applied at the time of operation.

Upon release of braking, the plunger 10 is returned to the initial position by the spring force of the return spring 17. When the plunger 10 is moved toward the cylinder hole opening, the outer peripheral lip portion 11c of the first cup seal 11 is distorted, thereby allowing the hydraulic fluid to favorably flow into the hydraulic pressure chamber 16 from the supply oil chamber 15. Moreover, upon movement of the plunger 10 toward the cylinder hole opening and passage of the communication ports 10c through the first cup seal 11, the hydraulic pressure chamber 16 and the supply oil chamber 15 are communicated with each other, and the hydraulic fluid favorably flows into the hydraulic pressure chamber 16 from the reservoir, thereby smoothly and reliably returning the plunger 10 to the initial position.

When the above-mentioned vehicle hydraulic master cylinder 1 is used in a brake system including a brake control mechanism, for example, the base portion 11a of the first cup seal 11 can suitably deform into the gap E1 and jamming of the base portion 11 a can be suppressed even if the hydraulic pressure or force for returning the plunger 10 is changed due to the operation of the brake control mechanism.

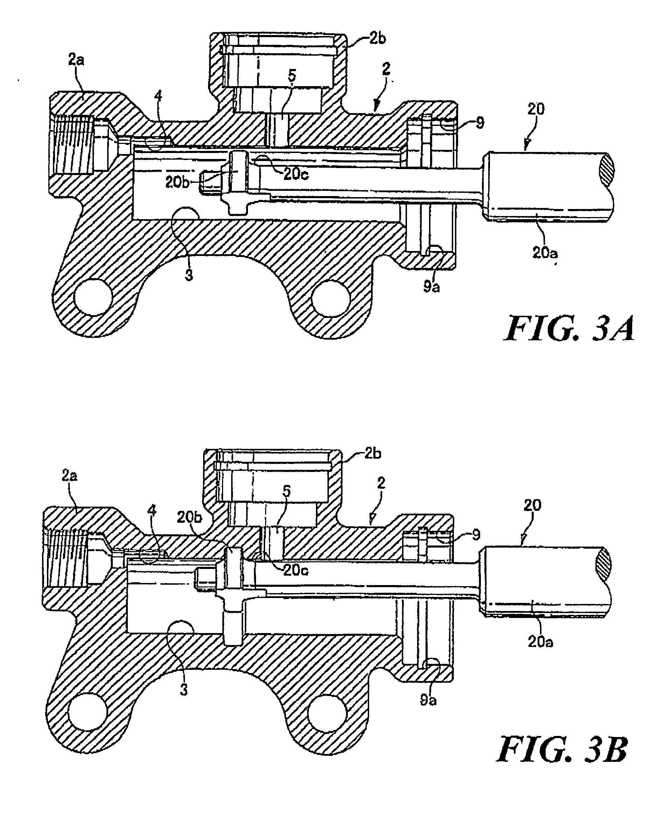

Next, a method for manufacturing the above-described vehicle hydraulic master cylinder 1 will be described. As illustrated in FIGS. 3A and 3B, the cylinder main body 2, which has been molded, is subjected to a cutting process to form the large diameter hole 9 and the engagement groove 9a at the opening of the cylinder hole 3, and is further subjected to a cutting process to form the inner peripheral surface of the cylinder hole 3. Then, the union boss portion 2a at the bottom of the cylinder hole 3 is drilled to form the union hole 4 along the cylinder axis. And, the boss portion 2b in a peripheral wall of the cylinder hole 3 is drilled to form the liquid passage hole 5 along a direction orthogonal to the cylinder axis. Subsequently, cutting processes are performed to form the first seal groove 13 and the second seal groove 14 at the inner peripheral surface 3b of the cylinder hole 3.

The cutting process for the first seal groove 13 is performed by using a cutting tool 20, as illustrated in FIGS. 3A and 3B. At a tip of a rotation shaft 20a of the cutting tool 20, a seal groove forming cutter 20b and a chamfered region cutter 20c are integrally provided. The seal groove forming cutter 20b is provided for performing cutting for the seal groove bottom surface 13a, the cylinder hole bottom-side surface 13b and the cylinder hole opening-side surface 13c. And, the chamfered region cutter 20c is provided for performing cutting for the rounded region 13e and the tapered region 13f. The cutting tool 20 is inserted into the cylinder hole 3 so that the rotation shaft 20a is parallel to the center axis CL1 of the cylinder hole 3 as illustrated in FIG. 3A. Then, as illustrated in FIG. 3B, while rotating the seal groove fanning cutter 20b and the chamfered region cutter 20c, the rotation shaft 20a is moved toward the cylinder hole peripheral wall at a preset distance in a radial direction, and is moved along the inner peripheral surface 3b of the cylinder hole 3 in a circumferential direction, thereby performing the cutting process and simultaneously forming the first seal groove 13, the rounded region 13e and the tapered region 13f (chamfered region 13g) at given positions of the inner peripheral surface 3b of the cylinder hole 3.

In the embodiment, the direction in which the cutting process for the union hole 4 is performed and the direction in which the cutting process for the cylinder hole 3 is performed are coincide with each other. Therefore, the cutting process for the cylinder hole 3 and the cutting process for the union hole 4 can be carried out in a single step, thereby improving machinability. Moreover, with the use of the cutting tool 20 integrally having the chamfered region cutter 20c for performing cutting for the rounded region 13e and the tapered region 13f, the cutting process for the first seal groove 13 can be carried out without strictly controlling a feed rate of the cutting tool 20 in the cylinder radial direction, and the cutting process can be simply and favorably performed to form the first seal groove 13 and the chamfered region 13g, thereby reducing cost.

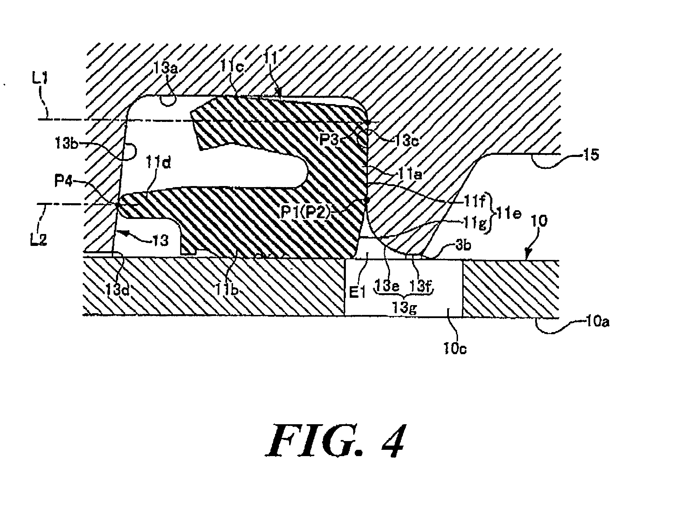

FIGS. 4 to 6 illustrate other embodiments. In the following description, constituent elements similar to those of the first embodiment are identified by the same reference characters, and the detailed description thereof will be omitted.

FIG. 4 illustrates a second embodiment. In this embodiment, the starting point P1 of the contact pressure adjustment surface 11g and the starting point P2 of the chamfered region 13g are located at the same position. Thus, the contact pressure adjustment surface 11g of the base portion 11a can be gradually deformed along the shape of the chamfered region 13g, and the base portion 11a can suitably deform into the gap E1.

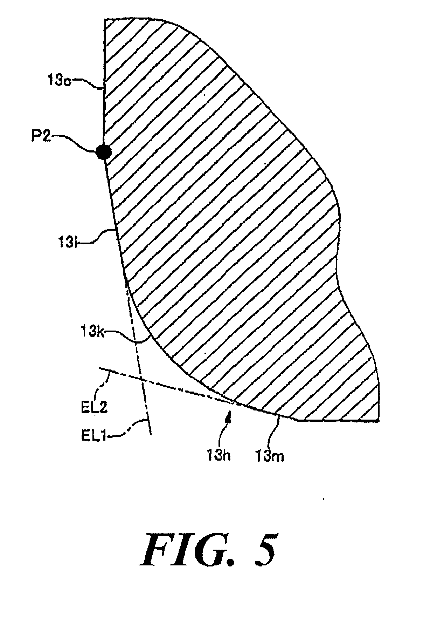

FIG. 5 illustrates a third embodiment. In the embodiment, a chamfered region 13h provided at a radial inner region of the cylinder hole opening-side surface 13c has: a first tapered region 13i continuous with the cylinder hole opening-side surface 13c and extended toward the seal groove opening 13d so as to be gradually inclined toward the cylinder hole opening; a rounded region 13k chamfered into a rounded shape (curved shape) so as to be continuous with the first tapered region 13i; and a second tapered region 13m chamfered into a tapered shape so that a cylinder hole opening-side region of the tapered shape is gradually reduced in diameter from a cylinder hole opening-side end of the rounded region 13k toward the cylinder hole opening.

A region of the cylinder hole opening-side surface 13c, located inwardly of the point of intersection of an extended line EL1 of the first tapered region 13i and an extended line EL2 of the second tapered region 13m, is chamfered into a rounded shape, thereby forming the rounded region 13k. A cutting process for the chamfered region 13h can be performed by using the cutting tool 20 in which the seal groove forming cutter 20b for performing cutting for the seal groove bottom surface 13a, the cylinder hole bottom-side surface 13b and the cylinder hole opening-side surface 13c and the chamfered region cutter 20c for performing cutting for the first tapered region 13i, the rounded region 13k and the second tapered region 13m are integrally provided at the tip of the rotation shaft 20a.

In the embodiment, since the first tapered region 13i is provided, the gap E1 between the chamfered region 13h and the contact pressure adjustment surface 11g of the first cup seal 11 is increased, thus allowing the base portion 11a of the first cup seal 11 to suitably deform into the gap E1 to thereby disperse stress when the first cup seal 11 receives hydraulic pressure.

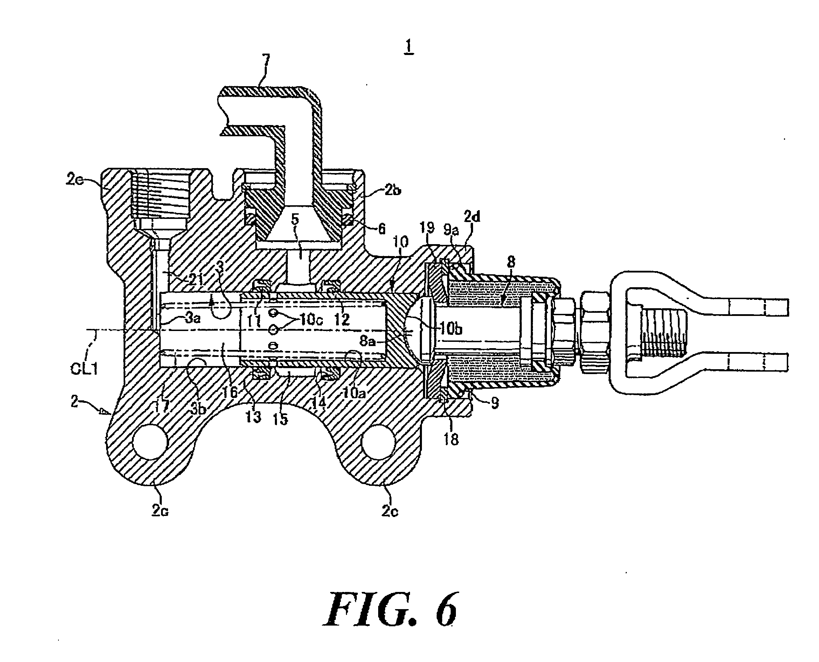

FIG. 6 illustrates a fourth embodiment. In the hydraulic master cylinder 1 according to the embodiment, a union boss portion 2e is provided at an upper part of the bottom 3a of the cylinder hole 3 so as to protrude in a direction orthogonal to the center axis CL1 of the cylinder hole 3, the union boss portion 2e is provided with a union hole 21 extending in a direction orthogonal to the center axis CL1 of the cylinder hole 3 and parallel to the liquid passage hole 5, and one side of the union hole 21 is opened at the bottom 3a of the cylinder hole 3. In the embodiment, the direction in which a cutting process for the union hole 21 is performed and the direction in which a cutting process for the liquid passage hole 5 is performed coincide with each other, and therefore, the union hole 21 and the liquid passage hole 5 can be formed in a single step, thereby improving machinability.

The present invention is not limited to each of the foregoing embodiments, but may also be applied to a seal groove and a cup seal used in a tandem type hydraulic master cylinder including two plungers, for example. Although the starting point of the contact pressure adjustment surface and the starting point of the chamfered region are located at the same position in the second embodiment, as long as a favorable gap is provided between the contact pressure adjustment surface and the chamfered region, the starting points are not strictly limited to the same position but may be located at positions close to each other. Moreover, the union hole is not limited to the position illustrated in each of the foregoing embodiments, but may be located at any position as long as the union hole is opened to the hydraulic pressure chamber.

## Claims

1. A vehicle hydraulic master cylinder (1) comprising:
a bottomed cylinder hole (3) formed in a cylinder main body (2);
an annular seal groove (13) provided at the cylinder hole (3);
a cup seal (11) fitted into the seal groove (13); and
a plunger (10) that has a concave portion (10a) opened at its tip and is slidably inserted into the cylinder hole (3) via the cup seal (11),
the seal groove (13) comprising:
a seal groove bottom surface (13a) extended along a circumferential direction of the cylinder hole (3);
a cylinder hole bottom-side surface (13b);
a cylinder hole opening-side surface (13c); and
a seal groove opening (13d) opened toward the plunger (10),
the cup seal (11) comprising:
a base portion (11a) located closer to the cylinder hole opening within the seal groove (13);
an inner peripheral lip portion (11b) that extends toward the cylinder hole bottom (3a) from the base portion (11a) so that an inner peripheral surface thereof slides along an outer peripheral surface of the plunger (10); and
an outer peripheral lip portion (11c) that extends toward the cylinder hole bottom (3a) from the base portion (11a) so that an outer peripheral surface thereof abuts against the seal groove bottom surface (13a),
**characterised in that** the seal groove (13) further comprises
a chamfered region (13g, 13h) formed by chamfering a radial inner region of the cylinder hole opening-side surface (13c) into a rounded shape (13e, 13k) continuous with an inner peripheral surface (3b) of the cylinder hole (3),
wherein the cup seal (11) further comprises
an elastic protrusive piece (11d) protruded from the inner peripheral lip portion (11b) to abut against the cylinder hole bottom-side surface (13b), and
a contact pressure adjustment surface (11g) formed at a radial inner region of the base portion (11a), the contact pressure adjustment surface (11g) consisting of a conical surface interjecting a radial plane of the cylinder hole (3) at an acute angle in a direction in which the conical surface gradually goes away from the cylinder hole opening-side surface (13c) as the conical surface extends radial inward, and
wherein, at the time of non-operation, a starting point (P1) of the contact pressure adjustment surface (11g) and a starting point (P2) of the chamfered region (13g, 13h) are located outwardly of a tip abutment point (P4) of the elastic protrusive piece (11d) against the cylinder hole bottom-side surface (13b),

2. The vehicle hydraulic master cylinder (1) of Claim 1,
wherein, at the time of non-operation, the starting point (P1) of the contact pressure adjustment surface (11g) and the starting point (P2) of the chamfered region (13g, 13h) are located between:
a cylinder radial position (L1) of an outermost abutment point (P3) of an abutment surface (11f) of the base portion (11a) against the cylinder hole opening-side surface (13c); and
a cylinder radial position (L2) of the tip abutment point (P4) of the elastic protrusive piece (11d) against the cylinder hole bottom-side surface (13b).

3. The vehicle hydraulic master cylinder (1) of Claim 1 or 2,
wherein the starting point (P1) of the contact pressure adjustment surface (11g) and the starting point (P2) of the chamfered region (13g, 13h) are located at the same position.

4. The vehicle hydraulic master cylinder (1) of any one of Claims 1 to 3,
wherein the chamfered region (13g) comprises:
a rounded region (13e) formed so as to be continuous with the cylinder hole opening-side surface (13c); and
a tapered region (13f) chamfered into a tapered shape so that a cylinder hole opening-side region of the tapered shape is gradually reduced in diameter from a cylinder hole opening-side end of the rounded region (13e) toward the inner peripheral surface (3b) of the cylinder hole (3).

5. The vehicle hydraulic master cylinder (1) of any one of Claims 1 to 3,
wherein the chamfered region (13h) comprises:
a rounded region (13e, 13k) formed by chamfering the radial inner region of the cylinder hole opening-side surface (13c) into the rounded shape; and
a radial inner tapered region (13f, 13m) chamfered into a tapered shape so that a cylinder hole opening-side region of the tapered shape is gradually reduced in diameter from a cylinder hole opening-side end of the rounded region (13e, 13k) toward the inner peripheral surface (3b) of the cylinder hole (3).

6. The vehicle hydraulic master cylinder (1) of Claim 5,
wherein the cylinder hole opening-side surface (13c) of the seal groove (13) is provided with a radial outer tapered region (13i) continuous with the cylinder hole opening-side surface (13c) and gradually inclined toward the cylinder hole opening to extend toward the seal groove opening (13d) and reach the rounded region (13k).

7. A method for forming the seal groove (13) in the vehicle hydraulic master cylinder (1) of any one of Claims 4 to 6,
wherein the method uses a cutting tool (20) in which a seal groove forming cutter (20b) and a chamfered region cutter (20c) are integrally provided at a tip of a rotation shaft (20a), the seal groove forming cutter (20b) for performing cutting for the seal groove bottom surface (13a), the cylinder hole bottom-side surface (13b) and the cylinder hole opening-side surface (13c), the chamfered region cutter (20c) for performing cutting for the rounded region (13e, 13k) and the tapered region (13f, 13m), and
wherein, in a state in which the rotation shaft (20a) is inserted into the cylinder hole (3) so that the rotation shaft (20a) is parallel to an axis (CL1) of the cylinder hole (3), while rotating the seal groove forming cutter (20b) and the chamfered region cutter (20c), the rotation shaft (20a) is moved toward a cylinder hole peripheral wall and is moved along the inner peripheral surface (3b) of the cylinder hole (3) in a circumferential direction, thereby simultaneously performing a cutting process for the seal groove (13) and a cutting process for the chamfered region (13g, 13b).

8. The vehicle hydraulic master cylinder (1) of any one of Claims 1 to 6,
wherein a hydraulic pressure chamber (16) is defined between the plunger (10) and the cylinder hole bottom (3a),
wherein the cylinder main body (2) has a union hole (4) opened to the hydraulic pressure chamber (16),
wherein a return spring (17) for returning the plunger (10) to a non-operating position is seated at its one end on a bottom of the concave portion (10a) of the plunger (10) and seated at its other end on the bottom (3a) of the cylinder hole (3), and
wherein the union hole (4) is opened at the bottom (3a) of the cylinder hole (3).

9. The vehicle hydraulic master cylinder (1) of Claim 8,
wherein the union hole (4) is opened at a position located outwardly of the bottom (3a) of the cylinder hole (4), on which the other end of the return spring (17) is seated.

10. The vehicle hydraulic master cylinder (1) of Claim 8 or 9,
wherein the union hole (4) is formed so that its axis is parallel to a center axis (CL1) of the cylinder hole (3).

## Patentansprüche

1. Fahrzeughydraulikhauptzylinder (1) mit:
einem in einem Zylinderhauptkörper (2) ausgebildeten, mit Boden versehenen Zylinderloch (3);
einer bei dem Zylinderloch (3) vorgesehenen ringförmigen Dichtungsnut (13);
einer in die Dichtungsnut (13) eingepasste Topfmanschette (11) ; und
einem Kolben (10), der einen an seinem Ende offenen konkaven Abschnitt (10a) aufweist, und über die Topfmanschette (11) gleitbar in das Zylinderloch (3) eingesetzt ist,
wobei die Dichtungsnut (13) aufweist:
eine Dichtungsnutbodenfläche (13a), die sich entlang einer Umfangsrichtung des Zylinderlochs (3) erstreckt;
eine Zylinderlochboden-seitige Fläche (13b);
eine Zylinderlochöffnungs-seitige Fläche (13c); und
eine Dichtungsnutöffnung (13b), die zu dem Kolben (10) hin offen ist, wobei die Topfmanschette (11) aufweist:
einen Basisabschnitt (11a), der innerhalb der Dichtungsnut (13) näher an der Zylinderlochöffnung angeordnet ist;
einen inneren Umfanglippenabschnitt (11b), der sich von dem Basisabschnitt (11a) zu dem Zylinderlochboden (3a) erstreckt, so dass seine innere Umfangsfläche entlang einer äußeren Umfangsfläche des Kolbens (10) gleitet; und
einen äußeren Umfanglippenabschnitt (11c), der sich von dem Basisabschnitt (11a) zu dem Zylinderlochboden (3a) erstreckt, so dass seine äußere Umfangsfläche an der Dichtungsnutbodenfläche (13a) anliegt,
**dadurch gekennzeichnet, dass** die Dichtungsnut (13) ferner aufweist:
einen abgeschrägten Bereich (13g, 13h), der durch Abschrägen eines radial inneren Bereichs der Zylinderlochöffnungs-seitigen Fläche (13c) in eine abgerundete Form (13e, 13k) gebildet ist, die kontinuierlich mit einer inneren Umfangsfläche (3b) des Zylinderlochs (3) ausgebildet ist,
wobei die Topfmanschette (11) ferner aufweist:
ein elastisches Vorsprungsstück (11b), das von dem inneren Umfanglippenabschnitt (11b) hervorsteht, um gegen die Zylinderlochboden-seitige Fläche (13b) anzuliegen, und
eine Kontaktdruckeinstellfläche (11g), die an einem radial inneren Bereich des Basisabschnitts (11a) gebildet ist, wobei die Kontaktdruckeinstellfläche (11g) aus einer konischen Fläche besteht, die eine Radialebene des Zylinderlochs (3) in einer Richtung, in der sich die konische Fläche graduell von der Zylinderlochöffnungs-seitigen Fläche (13c) entfernt, wenn sich die konische Fläche radial nach innen erstreckt, in einem spitzen Winkel schneidet, und
wobei, zu dem Zeitpunkt des Nichtbetriebs, ein Startpunkt (P1) der Kontaktdruckeinstellfläche (11g) und ein Startpunkt (P2) des abgeschrägten Bereichs (13g, 13h) außerhalb eines Endanliegepunkts (P4) des elastischen Vorsprungsstücks (11d) gegen die Zylinderlochboden-seitige Fläche (13b) angeordnet sind.

2. Fahrzeughydraulikhauptzylinder (1) nach Anspruch 1,
bei dem, zu dem Zeitpunkt des Nichtbetriebs, der Startpunkt (P1) der Kontaktdruckeinstellfläche (11g) und der Startpunkt (P2) des abgeschrägten Bereichs (13g, 13h) angeordnet sind zwischen:
einer Zylinderradialposition (L1) eines äußersten Anliegepunkts (P3) einer Anliegefläche (11f) des Basisabschnitts (11a) gegen die Zylinderlochöffnungs-seitige Fläche (13c); und
einer Zylinderradialposition (L2) des Endanliegepunkts (P4) des elastischen Vorsprungsstücks (11d) gegen die Zylinderlochboden-seitige Fläche (13b).

3. Fahrzeughydraulikhauptzylinder (1) nach Anspruch 1 oder 2,
bei dem der Startpunkt (P1) der Kontaktdruckeinstellfläche (11g) und der Startpunkt (P2) des abgeschrägten Bereichs (13g, 13h) bei derselben Position angeordnet sind.

4. Fahrzeughydraulikhauptzylinder (1) nach einem der Ansprüche 1-3, bei dem der abgeschrägte Bereich (13g) aufweist:
einen abgerundeten Bereich (13e), der so ausgebildet ist, dass er mit der Zylinderlochöffnungs-seitigen Fläche (13c) kontinuierlich ausgebildet ist; und
einen verjüngten Bereich (13f), der in einer verjüngten Form abgeschrägt ist, so dass ein Zylinderlochöffnungs-seitiger Bereich der verjüngten Form im Durchmesser von einem Zylinderlochöffnungs-seitigen Ende des abgerundeten Bereichs (13e) in Richtung der inneren Umfangsfläche (3b) des Zylinderlochs (3) graduell reduziert ist.

5. Fahrzeughydraulikhauptzylinder (1) nach einem der Ansprüche 1-3,
bei dem der abgeschrägte Bereich (13h) aufweist:
einen abgerundeten Bereich (13e, 13k), der durch Abschrägen des radial inneren Bereichs der Zylinderlochöffnungs-seitigen Fläche (13c) in die abgerundete Form gebildet ist; und
einen radial inneren verjüngten Bereich (13f, 13m), der in eine verjüngte Form abgeschrägt ist, so dass ein Zylinderlochöffnungs-seitiger Bereich der verjüngten Form im Durchmesser von einem Zylinderlochöffnungs-seitigen Ende des abgerundeten Bereichs (13e, 13k) in Richtung der inneren Umfangsfläche (3b) des Zylinderlochs (3) graduell reduziert ist.

6. Fahrzeughydraulikhauptzylinder (1) nach Anspruch 5,
bei dem die Zylinderlochöffnungs-seitige Fläche (13c) der Dichtungsnut (13) mit einem radial äußeren verjüngten Bereich (13i) versehen ist, der mit der Zylinderlochöffnungs-seitigen Fläche (13c) kontinuierlich ausgebildet ist und graduell in Richtung der Zylinderlochöffnung geneigt ausgebildet ist, um sich zu der Dichtungsnutöffnung (13b) zu erstrecken und den abgerundeten Bereich (13k) zu erreichen.

7. Verfahren zum Bilden der Dichtungsnut (13) in dem Fahrzeughydraulikhauptzylinder (1) nach einem der Ansprüche 4-6,
wobei das Verfahren ein Schneidewerkzeug (20) verwendet, bei dem ein Dichtungsnut-Bildeschneider (20b) und ein Abgeschrägter-Bereichschneider (20c) integral an einem Ende einer Drehwelle (20a) vorgesehen sind, der Dichtungsnut-Bildeschneider (20b) zum Ausführen von Schneiden für die Dichtungsnutbodenfläche (13a), die Zylinderlochboden-seitige Fläche (13b) und die Zylinderlochöffnungs-seitige Fläche (13c), der Abgeschrägte-Bereichschneider (20c) zum Ausführen von Schneiden für den abgerundeten Bereich (13e, 13k) und den verjüngten Bereich (13f, 13m), und
wobei, in einem Zustand, in dem die Drehwelle (20a) in das Zylinderloch (3) eingeführt ist, so dass die Drehwelle (20a) mit einer Achse (CL1) des Zylinderlochs (3) parallel steht, während der Dichtungsnut-Bildeschneider (20b) und der Abgeschrägte-Bereichschneider (20c) gedreht werden, die Drehwelle (20a) zu einer Zylinderlochumfangswand bewegt wird, und entlang der inneren Umfangsfläche (3b) des Zylinderlochs (3) in einer Umfangsrichtung bewegt wird, wodurch simultan ein Schneideverfahren für die Dichtungsnut (13) und ein Schneideverfahren für den abgeschrägten Bereich (13g, 13h) durchgeführt werden.

8. Fahrzeughydraulikhauptzylinder (1) nach einem der Ansprüche 1-6, bei dem eine Hydraulikdruckkammer (16) zwischen dem Kolben (10) und dem Zylinderlochboden (3a) definiert ist,
wobei der Zylinderhauptkörper (2) ein zu der Hydraulikdruckkammer (16) hin geöffnetes Einheitsloch (4) aufweist,
wobei eine Rückstellfeder (17) zum Zurückführen des Kolbens (10) in eine Nichtbetätigungsposition an ihrem einen Ende auf einem Boden des konkaven Abschnitts (10a) des Kolbens (10) gelagert ist und an ihrem anderen Ende auf dem Boden (3a) des Zylinderlochs (3) gelagert ist, und
wobei das Einheitsloch (4) an dem Boden (3a) des Zylinderlochs (3) geöffnet ist.

9. Fahrzeughydraulikhauptzylinder (1) nach Anspruch 8,
bei dem das Einheitsloch (4) bei einer Position geöffnet ist, die außerhalb des Bodens (3a) des Zylinderlochs (4) angeordnet ist, auf der das andere Ende der Rückstellfeder (17) gelagert ist.

10. Fahrzeughydraulikhauptzylinder (1) nach Anspruch 8 oder 9,
bei dem das Einheitsloch (4) so ausgebildet ist, dass seine Achse parallel zu einer Mittelachse (CL1) des Zylinderlochs (3) steht.

## Revendications

1. Maître-cylindre hydraulique (1) de véhicule comportant :
une cavité de cylindre dotée d'un fond (3) formée dans un corps principal de cylindre (2) ;
une rainure d'étanchéité annulaire (13) prévue au niveau de la cavité de cylindre (3) ;
un joint calotte (11) ajusté dans la rainure d'étanchéité (13) ; et
un piston plongeur (10) qui a une partie concave (10a) ouverte à son extrémité et qui est inséré de manière coulissante dans la cavité de cylindre (3) par l'intermédiaire du joint calotte (11),
la rainure d'étanchéité (13) comprenant :
une surface de fond de rainure d'étanchéité (13a) étendue le long d'une direction circonférentielle de la cavité de cylindre (3) ;
une surface côté fond de cavité de cylindre (13b) ;
une surface côté ouverture de cavité de cylindre (13c) ; et
une ouverture de rainure d'étanchéité (13d) ouverte vers le piston plongeur (10),
le joint calotte (11) comprenant :
une embasé (11a) située plus près de l'ouverture de la cavité de cylindre, à l'intérieur de la rainure d'étanchéité (13) ;
une partie formant lèvre périphérique intérieure (11b), qui s'étend vers le fond de la cavité de cylindre (3a) à partir de l'embase (11a) de sorte qu'une surface périphérique intérieure de celle-ci glisse le long d'une surface périphérique extérieure du piston plongeur (10) ; et
une partie formant lèvre périphérique extérieure (11c), qui s'étend vers le fond de cavité de cylindre (3a) à partir de l'embase (11a) de sorte qu'une surface périphérique extérieure de celle-ci est contiguë à la surface de fond (13a) de la rainure d'étanchéité,
**caractérisé en ce que** la rainure d'étanchéité (13) comprend en outre
une zone chanfreinée (13g, 13h) formée en chanfreinant une zone intérieure radiale de la surface côté ouverture de cavité de cylindre (13c) en une forme arrondie (13e, 13k) continue avec une surface périphérique intérieure (3b) de la cavité de cylindre (3),
dans lequel le joint calotte (11) comprend en outre
une pièce saillante élastique (11d) faisant saillie par rapport à la partie formant lèvre périphérique intérieure (11b) de manière à être contiguë à la surface côté fond de cavité de cylindre (13b) et
une surface d'ajustement de pression de contact (11g) formée au niveau d'une zone intérieure radiale de l'embase (11a), la surface d'ajustement de pression de contact (11g) consistant en une surface conique croisant un plan radial de la cavité de cylindre (3) sous un angle aigu dans une direction dans laquelle la surface conique s'éloigne progressivement de la surface côté ouverture de cavité de cylindre (13c) au fur et à mesure que la surface conique s'étend de façon radiale vers l'intérieur, et
dans lequel, au repos, un point de départ (P1) de la surface d'ajustement de pression de contact (11g) et un point de départ (P2) de la zone chanfreinée (13g, 13h) sont situés à l'extérieur d'un point de contiguïté d'extrémité (P4) de la pièce saillante élastique (11d) contiguë à la surface côté fond de cavité de cylindre (13b).

2. Maître-cylindre hydraulique (1) de véhicule selon la revendication 1,
dans lequel, au repos, le point de départ (P1) de la surface d'ajustement de pression de contact (11g) et le point de départ (P2) de la zone chanfreinée (13g, 13h) sont situés entre :
une position radiale de cylindre (L1) d'un point de contiguïté le plus éloigné (P3) d'une surface de contiguïté (11f) de l'embase (11a) contiguë à la surface côté ouverture de cavité de cylindre (13c) ; et
une position radiale de cylindre (L2) du point de contiguïté d'extrémité (P4) de la pièce saillante élastique (11d) contiguë à la surface côté fond de cavité de cylindre (13b).

3. Maître-cylindre hydraulique (1) de véhicule selon la revendication 1 ou 2,
dans lequel le point de départ (P1) de la surface d'ajustement de pression de contact (11g) et le point de départ (P2) de la zone chanfreinée (13g, 13h) sont situés au niveau de la même position.

4. Maître-cylindre hydraulique (1) de véhicule selon l'une quelconque des revendications 1 à 3,
dans lequel la zone chanfreinée (13g) comprend :
une zone arrondie (13e) formée de manière à être continue avec la surface côté ouverture de cavité de cylindre (13c) ; et
une zone effilée (13f) chanfreinée en une forme effilée de sorte que le diamètre d'une zone, côté ouverture de cavité de cylindre, de la forme effilée se réduise progressivement depuis une extrémité, côté ouverture de cavité de cylindre, de la zone arrondie (13e) vers la surface périphérique intérieure (3b) de la cavité de cylindre (3).

5. Maître-cylindre hydraulique (1) de véhicule selon l'une quelconque des revendications 1 à 3,
dans lequel la zone chanfreinée (13h) comprend :
une zone arrondie (13e, 13k) formée en chanfreinant la zone intérieure radiale de la surface côté ouverture de cavité de cylindre (13c) en une forme arrondie ; et
une zone effilée intérieure radiale (13f, 13m) chanfreinée en une forme effilée de sorte que le diamètre d'une zone côté ouverture de cavité de cylindre de forme effilée se réduise progressivement depuis une extrémité, côté ouverture de cavité de cylindre, de la zone arrondie (13e, 13k) vers la surface périphérique intérieure (3b) de la cavité de cylindre (3).

6. Maître-cylindre hydraulique (1) de véhicule selon la revendication 5,
dans lequel la surface côté ouverture de cavité de cylindre (13c) de la rainure d'étanchéité (13) est munie d'une zone effilée extérieure radiale (13i) continue avec la surface côté ouverture de cavité de cylindre (13c) et inclinée progressivement vers l'ouverture de cavité de cylindre de manière à s'étendre vers l'ouverture de rainure d'étanchéité (13d) et atteindre la zone arrondie (13k).

7. Procédé de formation de la rainure d'étanchéité (13) dans le maître-cylindre hydraulique (1) de véhicule selon l'une quelconque des revendications 4 à 6,
dans lequel le procédé utilise un outil de coupe (20) dans lequel un dispositif de coupe de formation de rainure d'étanchéité (20b) et un dispositif de coupe de zone chanfreinée (20c) sont prévus d'un seul tenant au niveau d'une extrémité d'un arbre rotatif (20a), le dispositif de coupe de formation de la rainure d'étanchéité (20b) servant à effectuer la coupe de la surface de fond de la rainure d'étanchéité (13a), de la surface côté fond de cavité de cylindre (13b) et de la surface côté ouverture de cavité de cylindre (13c), le dispositif de coupe de zone chanfreinée (20c) servant à effectuer la coupe de la zone arrondie (13e, 13k) et de la zone effilée (13f, 13m), et
dans lequel, dans un état où l'on insère l'arbre rotatif (20a) dans la cavité de cylindre (3) de sorte que l'arbre rotatif (20a) soit parallèle à un axe (CL1) de la cavité de cylindre (3) tout en faisant tourner le dispositif de coupe de formation de la rainure d'étanchéité (20b) et le dispositif de coupe de zone chanfreinée (20c), l'arbre rotatif (20a) est déplacé vers une paroi périphérique de cavité de cylindre et est déplacé le long de la surface périphérique intérieure (3b) de la cavité de cylindre (3) dans une direction circonférentielle, effectuant de ce fait simultanément un processus de coupe de la rainure d'étanchéité (13) et un processus de coupe de la zone chanfreinée (13g, 13b).

8. Maître-cylindre hydraulique (1) de véhicule selon l'une quelconque des revendications 1 à 6,
dans lequel une chambre de pression hydraulique (16) est définie entre le piston plongeur (10) et le fond de cavité de cylindre (3a),
dans lequel le corps principal de cylindre (2) a un trou d'union (4) ouvert dans la chambre de pression hydraulique (16),
dans lequel un ressort de rappel (17) servant à rappeler le piston plongeur (10) dans une position de repos prend appui au niveau de sa première extrémité sur un fond de la partie concave (10a) du piston plongeur (10) et prend appui au niveau de son autre extrémité sur le fond (3a) de la cavité de cylindre (3), et
dans lequel le trou d'union (4) est ouvert au fond (3a) de la cavité de cylindre (3).

9. Maître-cylindre hydraulique (1) de véhicule selon la revendication 8,
dans lequel le trou d'union (4) est ouvert au niveau d'une position située à l'extérieur du fond (3a) de la cavité de cylindre (3), sur lequel l'autre extrémité du ressort de rappel (17) prend appui.

10. Maître-cylindre hydraulique (1) de véhicule selon la revendication 8 ou 9,
dans lequel le trou d'union (4) est formé de sorte que son axe est parallèle à un axe central (CL1) de la cavité de cylindre (3).
